# EUROPEAN PATENT APPLICATION

(11) **EP 0 546 490 A1**
(43) Date of publication of application: **16.06.1993**
(21) Application number: 92120846.8
(22) Date of filing: 07.12.1992
(51) Int. Cl.: F16L 27/12

(54) **Dilatation compensation device for tubular pipes**

(30) Priority: 09.12.1991 FR 9115406
(71) Applicant: PRANDELLI S.r.l., I-25065 Lumezzane S.S. (Brescia) (IT)
(72) Inventor: Frey, Georges-André, CH-1602 La Croix-sur-Lutry (CH)
(74) Representative: Modiano, Guido, Dr.-Ing.

(57) **Abstract**

The compensating device for the compensation of the dilatation of tubular pipes made of synthetic resins is characterized in that the two end sections of the two tubular pipes (15, 16) to be connected are provided with watertight condition securing means for performing a watertight connection while still permitting the axial displacement of one of the sections with respect to the other. Said watertight means can be toroidal joints (13) arranged in grooves (14) provided in the inner wall of a sleeve (11) assembled on the end of the tubular pipe (16) and in which the end section (15a) of the tubular pipe (15) slides.

The device is particularly adapted for central heating facilities and for equipments for the feeding of drinking water or for water used for sanitary facilities.

## Description

The present invention relates to a compensating device for the compensation of the dilatation of tubular pipes made of synthetic resins, more particularly of polypropylene.

In central heating facilities where equipments for the feeding of drinking water or for water used for sanitary facilities provide for steel pipes, dilatation compensating devices are generally used, which comprise two pipe sections which are joined together, so as to be able to slide axially between each other, and a coaxial sleeve, which is made of stainless steel pleated in the manner of an accordion, which can expand or be compressed according to a given length corresponding to the dilatation of the pipes to which the compensating devices are linked. The watertight condition is brought about by the coaxial sleeve, the ends whereof are each welded or sealed to the two sections of the joined pipes. The joining of the sections of the pipes permits to make sure that they are correctly guided and that they are maintained in an essentially coaxial position.

Such compensating devices do not permit but to compensate dilatations which are relatively small ones, in the order of 30 to 50 mm as a maximum. Besides, they are expensive and cannot be used but for facilities in which the tubular pipes are made of steel.

Nowadays more and more synthetic resins pipes are used and more particularly pipes made of polypropylene having thick walls, which resist important pressures and which can be welded together by thermosealing. Since the dilatation coefficient of this material is relatively high, in the order of 07, the compensation of the dilatation is obtained by providing, at regular intervals, dilatation arms which are made of open loops having a U shape, which are horizontally or vertically arranged and which permit to the longitudinal sections to expand as a consequence of the variations of temperatures. As an example, the longitudinal extension of a 20 m long pipe is about 14 cm for an increase of the temperature of 50 °C. In order to compensate for this dilatation, the builder envisages the arrangement of a "dilatation arm" made of a open U loop, the lateral legs of which have a length of 1,3 to 1,5 m, and the central portion of which has a length of 0,3 to 0,5 m. Besides, this dilatation arm needs the provision of four elbow pieces at 90°, which implies eight welding operations.

It is easily understood that such compensating devices are bulky, expensive and generate losses of time which are not negligible for the fixing manpower.

The aim of the present invention is to obviate to such inconveniences of known systems by providing a compensating device for the compensation of dilatations which is of simple manufacture, which implies a little cumbering space, is of reasonable cost and the installation whereof is quickly and easily performed due to the use of conventional equipments.

This object is achieved by a compensating device according to the invention, characterized in that it comprises two end sections of pipes which are axially joined between each other and at least one section of which is equipped with watertight means made in such a way as to bring about a watertight connection while still permitting the axial displacement of one of such sections with respect to the other one.

According to a first embodiment, such watertight means comprise two surfaces which are precisely machined and polished, and which are provided respectively at the periphery of one of the tubular pipe sections and at the inner portion of the other section, such two surfaces having the same diameter with a precision tolerance in the order of micrometrical values.

According to a second embodiment, said watertight means comprise two jackets made in such a way as to fit within each other, such jackets being respectively assembled on two end portions of tubular pipes and one of such jackets having an inner diameter which is equal, with a precision in the order of micrometical values, to the external diameter of the other one.

Preferably, the jackets are made in a material which is selected among metals, metallic alloys and ceramic.

In particularly advantageous embodiments, the watertight means comprise at least a toroidal joint arranged between the end sections of the two tubular pipes fitted within each other, said toroidal joint being able to be arranged in a groove provided at the periphery of the end section of the tubular pipe which is engaged within the inner side of the other section or housed in a groove provided in the inner wall of the end section of the tubular pipe arranged outside with respect to the other section.

The watertight means may comprise at least two toroidal joints arranged parallely between each other.

In such embodiments the toroidal joint is arranged between an end section of one of the said tubular pipes and a sleeve within which said end section is fitted, the other end section of the other tubular pipe being welded to said sleeve and preferably, said sleeve being welded to said tubular pipe through a reduction joint.

Further characteristics and advantages of the invention will become apparent from the description of preferred but not exclusive embodiments illustrated by way of non-limitative examples in the accompanying drawings, wherein:
Fig. 1 is an axial sectional view of a preferred embodiment of the compensation device according to the invention,
Fig. 2 is an axial sectional view of a variance with respect to the embodiment shown in Fig. 1,
Fig. 3 is an axial sectional view of another embodiment of the compensation device according to the invention,
Fig. 4 is a variance in the construction represented by Fig. 3, and
Fig. 5 is an axial sectional view of a further embodiment of the compensation device according to the invention.

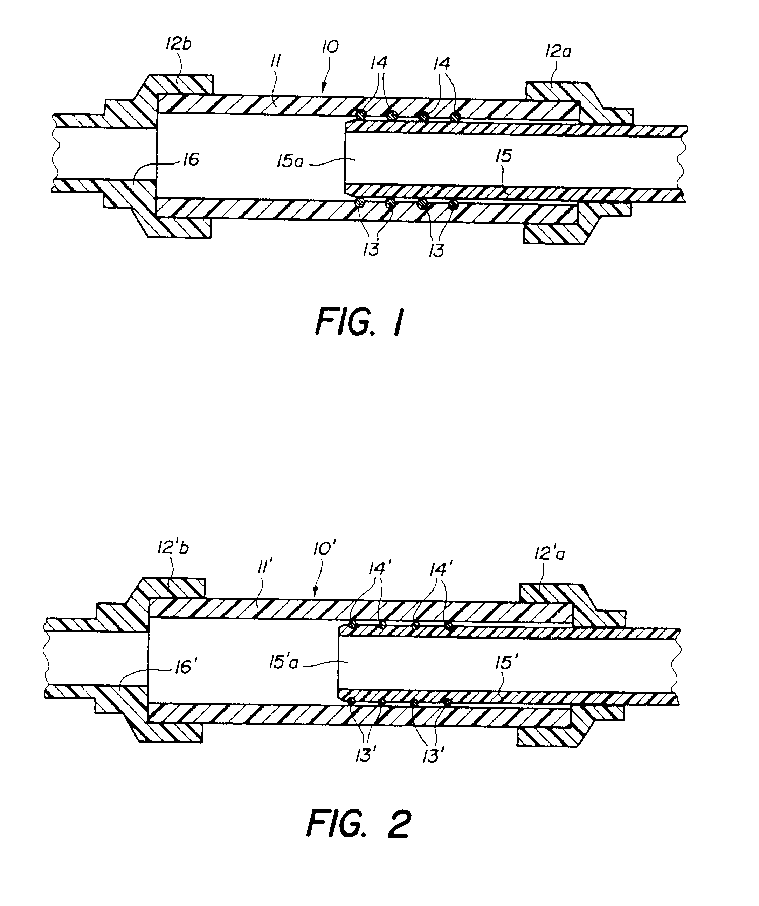

With reference to Fig. 1, the dilatation compensation device 10 shown therein is formed essentially of a sleeve 11 which is equipped at its two ends with reduction joints 12a and 12b and with at least a toroidal joint 13, housed in an annular groove 14 provided in the inner wall of the sleeve 11. In the illustrated example, the annular grooves 14 and the toroidal joints 13 corresponding thereto are four in number. However it has been found that the watertight condition could have been formed even with one toroidal joint only. A second joint is convenient for performing the guiding of a tubular pipe 15, which is engaged within the inner side of the sleeve 11. The supplementary joints are provided for complementary safety reasons, in the case in which the pressure within the internal area of the facility is high.

In this embodiment, the compensation device is secured to the end section of a tubular pipe 16, through a reduction joint 12b, to which it is linked by thermosealing obtained by means of the heating of the two pieces to be assembled.

This reduction joint is moreover welded or sealed to the sleeve 11. The reduction joint 12a is equally welded or sealed to the sleeve 11. Instead, the pipe 15 can freely slide throughout this joint. The pipe 15 is freely fitted within the inner portion of the sleeve 11. The length of this sleeve is such that the end 15a of the pipe 15 may slide without abutting against the reduction joint 12b and without disengaging itself from the toroidal joints 13.

It has been found that the device is not bulky and occupies an axial position in the direction in which the pipes to be joined develop themselves, contrarily to the known dilatation arms which show a relatively important bulkiness.

Fig. 2 shows an embodiment which is similar to the one of Fig. 1, but in which the toroidal joints 13' are housed in grooves 14' provided at the periphery of the pipe 15, the inner wall of the sleeve 11 being a smooth one. It has the advantage that the provision of the grooves - to the extent that they are machined and not obtained by molding - is easier to be performed on the external wall of the pipe rather than on its internal wall.

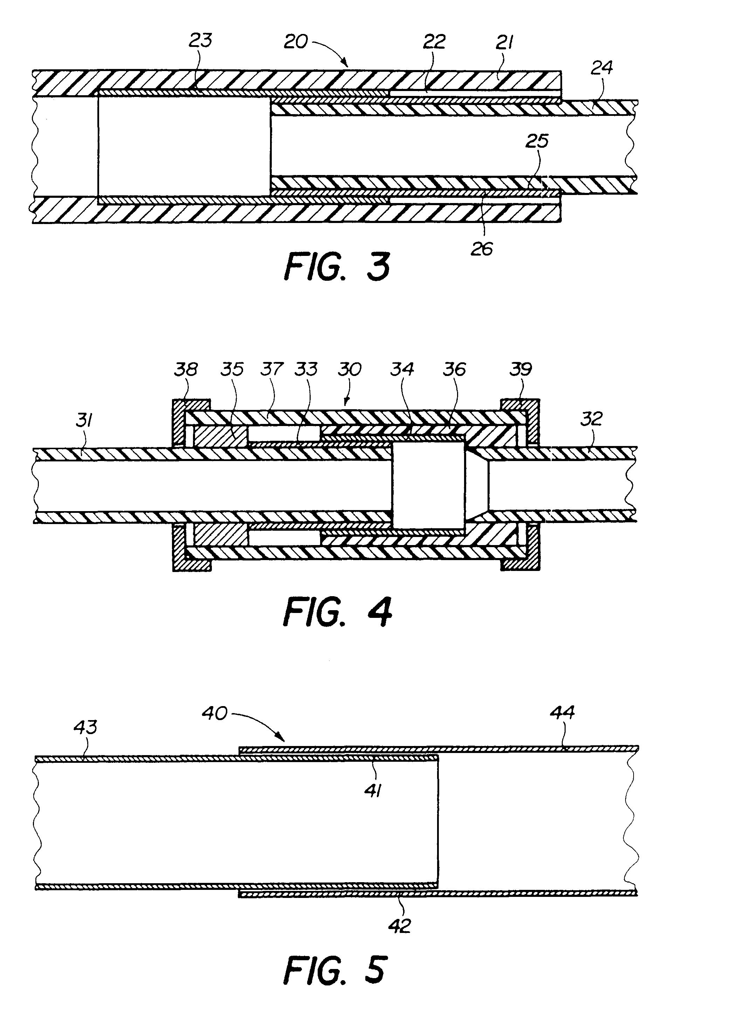

Fig. 3 and 4 represent two embodiments of a dilatation compensation device, indicated with 20 and 30 respectively, in which the watertight condition of the two tubular pipes to be joined is obtained by two jackets which are machined with precision and which are fitted within each other coaxially, so as to slide the one within the other when the pipes are subject to dilatation or to contraction. The machining has to have a precision tolerance in the order of micrometrical values, which permits to suppress the toroidal joints disclosed herebefore. The jackets are preferably metallic ones, for example made of stainless steel, of copper, of brass or of any other alloy. A superficial treatment can be provided in order to avoid corrosion and to facilitate the sliding.

In the example shown in figure 3, a tubular or external pipe 21 is internally precision-bored on an end section 22 in order to assemble within it a jacket 23 which is coaxial to such a pipe. A tubular or internal pipe 24 is externally machined on an end portion 25 so as to permit to mount on it a jacket 26 which is coaxial with said pipe. The jacket 23 has a diameter which is equal to the outer diameter of the jacket 26, with a precision tolerance in the order of micrometrical values. When the two jackets are engaged one within the other, the watertight condition between the two pipes is assured, even in case of high pressure. When such pipes undergo dilatation or contraction, the jackets slide one within the other while still keeping the watertight condition unprejudiced.

In the example shown in Fig. 4, the dilatation compensation device 30 is assembled between two end sections of two tubular pipes 31 and 32. It essentially comprises two cylindrical jackets 33 and 34 made of brass, copper or stainless steel, of ceramic or made of any other appropriate material, which is machined with a precision tolerance in the order of micrometrical values. The jacket 33 is fitted on the end of the pipe 31 and retained by a stop ring 35 welded to said pipe. The jacket 34 is engaged in a hollow space located at the external side of a ring 36 welded to the tubular pipe 32. A sleeve 37 is arranged around the two rings 35 and 36, the ring 36 being welded to the sleeve 37 and the ring 35 having an external diameter which is slightly smaller than the inner diameter of the sleeve 37, so as to permit the relative axial sliding of such two elements. Two elbow stop rings 38 and 39 are welded to the two ends of the sleeve 37.

The simplest embodiment is shown in Fig. 5. The jacketing of the ends of the tubular pipes is substituted by a very precise machining of the ends of the pipes. The dilatation compensation device 40 so obtained is formed of two polished surfaces 41 and 42 respectively formed by machining the two ends of two tubular pipes 43 and 44, fitted within each other. If the machining is sufficiently precise (in the order of micrometrical values) the watertight condition which is obtained is a perfect one, even in case of high pressures. Since the relative displacements of the two tubular pipes, due to dilatation, are slow ones, the wear of the surfaces 41 and 42 by friction is almost nonex- istent. As a consequence this embodiment, even if it is a summary one, has shown to be efficient and reliable.

The present invention is not limited to the embodiments hereabove disclosed but expands to any embodiments and to any developments which are obvious for the man skilled in the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A dilatation compensation device for tubular pipes made of synthetic resins , and particularly of polypropylene, characterized in that it comprises two end sections of such pipes (15, 16) fitted coaxially within each other and of which at least one section is provided with watertight condition securing means for performing a watertight connection while still permitting an axial displacement of one of the sections with respect to the other.

2. A device according to claim 1, characterized in that said watertight means comprise two surfaces (41, 42) precision-machined and polished, respectively provided at the periphery of one of the sections (43) of the tubular pipe and at the inner side of the other section (44), said two surfaces having the same diameter with a precision tolerance in the order of micrometrical values.

3. A device according to claim 1, characterized in that said watertight means comprise two jackets (33, 34) arranged so as to fit within each other, such jackets being assembled respectively on two end sections of the tubular pipes (31,32) and one of such jackets having a diameter which is equal, with tolerances in the order of micrometrical values, to the external diameter of the other one.

4. A device according to claim 3, characterized in that the jackets (33,34) are made out of a material selected among metals, metallic alloys and ceramic.

5. A device according to claim 1, characterized in that the watertight means comprise at least a toroidal joint (13, 13') arranged within the end sections of the two tubular pipes engaged one within the other.

6. A device according to claim 5, characterized in that said toroidal joint (13') is arranged in a groove (14') provided at the priphery of the end section (15'a) of the tubular pipe (15') engaged within the inner side of the other section.

7. A device according to claim 5, characterized in that said toroidal joint (13) is arranged within a groove (14) provided in the inner wall of the end section of the tubular pipe (16) arranged at the external side with respect to the other section (15a).

8. A device according to claim 5, characterized in that the watertight condition means comprise at least two toroidal joints (13, 13') arranged in parallel condition between each other.

9. A device according to claim 5, characterized in that said toroidal joint (13, 13') is arranged between an end section (15a, 15'a) of one of said tubular pipes (15, 15') and a sleeve (11, 11') in which said end section is fitted in, the other end section of the other tubular pipe (16, 16') being welded to said sleeve.

10. A device according to claim 9, characterized in that said sleeve (11, 11') is welded to said tubular pipe (16,16') through a reduction joint (12b, 12'b).
